(19) Europäisches Patentamt
European Patent Office
Office européen des brevets

(11) Veröffentlichungsnummer: **0 190 595**
**A2**

(12) **EUROPÄISCHE PATENTANMELDUNG**

(21) Anmeldenummer: **86100664.1**

(22) Anmeldetag: **20.01.86**

(51) Int. Cl.⁴: **A01N 25/08** , A01N 57/14 , A01N 47/22 , //(A01N57/14,47:22)

(30) Priorität: **02.02.85 DE 3503608**

(43) Veröffentlichungstag der Anmeldung: **13.08.86 Patentblatt 86/33**

(84) Benannte Vertragsstaaten: **AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Möllis, Hans-Heinz, Dr.**
**Westerwaldstrasse 29**
**D-6348 Herborn(DE)**
Erfinder: **Schrader, Jörn, Dipl.-Ing.**
**Walter-Kolb-Strasse 8**
**D-4019 Monheim(DE)**
Erfinder: **Schnorbach, Hans-Jürgen, Dr.**
**Gerstenkamp 19**
**D-5000 Köln 80(DE)**
Erfinder: **Krauthausen, Edmund, Dr.**
**Franz-Grillparzer-Ring 4**
**D-5000 Köln 71(DE)**

(54) **Leichtkorn-Köder.**

(57) Neue Leichtkorn-Köder, die

- als Trägermaterial einen während des Blähvorganges unter Druck arrondierten körnigen Glas- oder Gesteinsschaum,

- mindestens einen zur Bekämpfung von Bodenschädlingen geeigneten Carbamat- und/oder Phosphorsäureester--Wirkstoff,

- Fraßstoff,

- Bindemittel und

- gegebenenfalls Zusatzstoffe

enthalten,

ein Verfahren zur Herstellung dieser Köder und deren Verwendung zur Bekämpfung von Bodenschädlingen.

EP 0 190 595 A2

Rank Xerox

# Leichtkorn-Köder

Die vorliegende Erfindung betrifft neue Leichtkorn--Köder, ein Verfahren zur Herstellung dieser Köder und deren Verwendung zur Bekämpfung von Bodenschädlingen.

Es ist bereits bekannt geworden, Bodenschädlinge, wie Schnecken und Erdraupen, mit Hilfe von homogenen Materialgemischen zu bekämpfen, die im wesentlichen aus Wirkstoff und Fraßstoff bestehen und durch Extrudierung hergestellt werden. Diese Köder, deren Durchmesser bzw. Länge von 2 bis 5 mm beträgt, sind zu groß, um vollständig von den Schädlingen aufgenommen zu werden. Darin ist ein entscheidender Nachteil zu sehen, denn der verbleibende Rest stellt eine potentielle Gefahr für warmblütige Lebewesen, wie Säugetiere und Vögel, aber auch für Bodenlebewesen, wie Regenwürmer, Laufkäfer usw. dar. Werden Köder dieses Typs eingesetzt, deren Durchmesser unterhalb von 2 mm liegt, so sammeln sie sich beim Ausbringen in erheblicher Menge in kleinen Erdvertiefungen, wo sie für die Bodenschädlinge kaum oder gar nicht erreichbar sind. Der Wirkungsgrad dieser feinteiligen Köder ist deshalb für praktische Zwecke unbefriedigend.

Weiterhin ist bekannt, inerte, voluminöse Trägermaterialien, die Wirkstoff und Fraßstoff in der jeweils gewünschten Menge an ihrer Oberfläche enthalten, zur Bekämpfung von Bodenschädlingen zu verwenden (vgl. DE-OS 2 512 163 und DE-OS 2 512 164). So können z.B. mit Metaldehyd beschichtete Perlit-Körner als Schneckenvertilgungsmittel eingesetzt werden. Nachteilig ist jedoch, daß diese Köder bei hoher Bodenfeuchtigkeit oder bei Regen weniger gut wirksam sind. Im übrigen ist Perlit als Trägermaterial für andere molluskizide Wirkstoffe als Metaldehyd nur bedingt geeignet. Die Oberfläche der Perlit--Granalien ist so porös, daß sich aktive Komponenten, die ihre volle Wirkung nur dann entfalten, wenn sie in genügend fein verteiltem Zustand vorhanden sind, kaum in der erforderlichen Weise gleichmäßig aufbringen lassen.

Schließlich ist bekannt, daß N-Methyl-O-(3,5-dimethyl--4-methylthio-phenyl)-carbamat zur Bekämpfung von Schnecken eingesetzt werden kann (vgl. Büchel, Pflanzenschutz- und Schädlingsbekämpfungsmittel", Georg Thieme--Verlag, Stuttgart, 1977, Seite 107 und D. Godan "Schadschnecken und ihre Bekämpfung", Ulmer 1979, Seite 220). Die molluskizide Potenz der bisher üblichen durch Extrudierung hergestellten Köderformulierungen dieses Stoffes ist gut. Beeinträchtigend für den Einsatz dieser Produkte ist allerdings die Tatsache, daß die Köder auf feuchten Böden oder durch Einwirkung von Regenwasser schon nach relativ kurzer Zeit zerfallen und sich mit Schimmel überziehen. Aufgrund des Köderzerfalls kann der enthaltene Wirkstoff in das Erdreich gelangen, wo er unerwünscht ist.

Es wurden nun neue Leichtkorn-Köder gefunden, die

- als Trägermaterial einen während des Blähvorganges unter Druck arrondierten körnigen Glas- oder Gesteinsschaum, - mindestens einen zur Bekämpfung von Bodenschädlingen geeigneten Carbamat- und/oder Phosphorsäureester-Wirkstoff,

- Fraßstoff,

- Bindemittel und

- gegebenenfalls Zusatzstoffe

enthalten.

Weiterhin wurde gefunden, daß sich die erfindungsgemäßen Leichtkorn-Köder dadurch herstellen lassen, daß man einen während des Blähvorganges unter Druck arrondierten körnigen Glas- oder Gesteinsschaum durch Mischen mit Bindemittel, gegebenenfalls im Gemisch mit einem Verdünnungsmittel, sowie mit mindestens einem zur Bekämpfung von Bodenschädlingen geeigneten Carbamat- und/oder Phosphorsäureester-Wirkstoff, Fraßstoff und gegebenenfalls Zusatzstoffen, sowie gegebenenfalls mit weiterem Bindemittel, gegebenenfalls in Gegenwart eines Verdünnungsmittels, beschichtet und die so erhaltenen körnigen Produkte gegebenenfalls trocknet und gegebenenfalls erneut in der angegebenen Weise beschichtet.

Schließlich wurde gefunden, daß sich die erfindungsgemäßen Leichtkorn-Köder sehr gut zur Bekämpfung von Bodenschädlingen verwenden lassen.

Es ist als äußerst überraschend zu bezeichnen, daß die erfindungsgemäßen Leichtkornköder bei der Bekämpfung von Bodenschädlingen eine wesentlich bessere Wirkung zeigen als vorbekannte Leichtkorn-Köder, die Metaldehyd als aktive Komponente enthalten. Ferner übertreffen die erfindungsgemäßen Produkte unerwarteterweise auch herkömmliche, durch Extrudierung hergestellte Köderformulierungen auf Basis von N-Methyl-O-(3,5--dimethyl-4-methylthiophenyl)-carbamat bezüglich ihrer Beständigkeit gegenüber Umwelteinflüssen. So wird z.B. im Falle der durch Extrudierung hergestellten Köder unter Praxisbedingungen schon nach verhältnismäßig kurzer Zeit eine Schimmelbildung beobachtet, während die erfindungsgemäßen Leichtkorn-Köder unverändert vorliegen. Ferner zerfallen die durch Extrudierung erhältlichen Köder unter Einwirkung von Feuchtigkeit, insbesondere Regen, relativ schnell, wogegen die erfindungsgemäßen Köder--Formulierungen unter analogen Bedingungen kaum beeinträchtigt werden.

Ein wesentlicher Vorteil der erfindungsgemäßen Produkte gegenüber vorbekannten Köderformulierungen für den gleichen Anwendungszweck besteht darin, daß sie eine deutlich längere Wirkung entfalten. Im übrigen wird der Wirkstoff im Falle der erfindungsgemäßen Köder nahezu vollständig für die Bekämpfung von Bodenschädlingen ausgenutzt, so daß warmblütige Lebewesen, wie Säugetiere und Vögel, aber auch Bodenlebewesen, wie Regenwürmer und Laufkäfer, nicht gefährdet sind und darüberhinaus auch keine nennenswerten Wirkstoffmengen in das Erdreich gelangen.

Als Trägermaterialien können in den erfindungsgemäßen Leichtkorn-Ködern alle üblichen unter Druck arrondierten körnigen Glas- oder Gesteinsschäume enthalten sein. Hierunter sind in diesem Zusammenhang gleichmäßig runde, voluminöse Granulate zu verstehen, die eine glatte Oberfläche aufweisen. Vorzugsweise infrage kommen während des Blähvorganges unter Druck arrondierte Perlit--Granalien mit einem mittleren Teilchendurchmesser von 1 bis 6 mm, insbesondere von 2 bis 5 mm, und einem Schüttvolumen von 200 bis 800 ml pro 100 g, insbesondere von 250 bis 750 ml pro 100 g. - Derartige Trägermaterialien sind bekannt.

Als aktive Komponenten sind in den erfindungsgemäßen Leichtkorn-Ködern eine oder mehrere zur Bekämpfung von Bodenschädlingen geeignete Wirkstoffe aus der Klasse der Phosphorsäureester bzw. Carbamate vorhanden. Beispielhaft genannt seien O,O--Diethylthionophosphoryl -α-oximino-phenyl-essigsäure-nitril und N-Methyl-O-(3,5-dimethyl-4-methylthio-phenyl)--carbamat.

Unter Bodenschädlingen sind im vorliegenden Fall vorzugsweise Schnecken und Erdraupen zu verstehen.

Als Fraßstoffe können in den erfindungsgemäßen Leichtkorn-Ködern alle üblichen in derartigen Ködern verwendbaren Futtersubstanzen enthalten sein. Vorzugsweise in Betracht kommen gemahlenes Getreide, wie z.B. Weizenmehl, Weizenschrot und Gerstenschrot, ferner Sojaschrot, Kleie, Reisstärke, Fischmehl, Fleischmehl und Melasse. - Es kann entweder nur ein Fraßstoff oder auch ein Gemisch aus mehreren Fraßstoffen vorhanden sein.

Als Bindemittel können in den erfindungsgemäßen Leichtkorn-Ködern alle üblichen für derartige Zwecke verwendbaren Kleber vorhanden sein. Vorzugsweise infrage kommen Methylcellulose, Zucker, Dextrin, Stärke, Alginate, Glycole, Polyvinylpyrrolidon, Ligninsulfonat, Gummiarabicum, Polyvinylalkohol und Polyvinylacetat. - Es können ein oder mehrere Bindemittel enthalten sein.

Als Zusatzstoffe, die in den erfindungsgemäßen Leichtkorn-Ködern enthalten sein können, kommen Konservierungsmittel, Farbstoffe, Lockstoffe, Mahlhilfsmittel, Repellents sowie Wasser und organische Solventien infrage.

Als Beispiele für gegebenenfalls vorhandene Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt.

Als Farbstoffe, die als Zusatzstoffe in Betracht kommen, seien anorganische Pigmente, wie Eisenoxid, Titandioxid und Ferrocyanblau und organische Farbstoffe, wie Anthrachinon-, Azo- und Metallphthalocyaninfarbstoffe genannt.

Als Stoffe, die einen Lockreiz auf Bodenschädlinge ausüben, können alle üblichen für diesen Zweck geeigneten Komponenten verwendet werden. Beispielhaft genannt seien Anis und Anisöl.

Als Mahlhilfsmittel kommen alle üblichen für diesen Zweck verwendbaren Stoffe in Betracht. Vorzugsweise genannt seien Kaoline, Tonerden, Talkum, Kreide und Quarzpulver.

Als Repellents, die eine abweisende Wirkung auf warmblütige Lebewesen, wie Hunde und Igel, ausüben, können alle üblichen für diesen Zweck geeigneten Komponenten eingesetzt werden. Beispielhaft genannt sei Nonylsäurevanillylamid.

Als organische Solventien kommen alle üblicherweise für die Herstellung von Ködern verwendbaren organischen Lösungsmittel infrage. Vorzugsweise in Betracht kommen niedrig siedende organische Solventien, wie Methanol, Ethanol, Butanol und Methylenchlorid.

Die erfindungsgemäßen Leichtkorn-Köder bestehen aus körnigen Trägermaterialien, auf deren glatter Oberfläche sich eine umhüllende Schicht befindet, die mindestens einen zur Bekämpfung von Bodenschädlingen geeigneten Carbamat- und/oder Phosphorsäureester-Wirkstoff sowie Fraßstoff, Bindemittel und gegebenenfalls Zusatzstoffe enthält. In den Hohlräumen des Trägermaterials können Wasser, organische Solventien oder Lösungen, Dispersionen, Emulsionen oder Latices von den als Bindemitteln eingesetzten Klebern enthalten sein.

In den erfindungsgemäßen Leichkorn-Ködern können die prozentualen Anteile der enthaltenen Komponenten innerhalb größerer Bereiche variiert werden. Der Anteil an Trägermaterial liegt im allgemeinen zwischen 30 und 70 Gew.-%, vorzugsweise zwischen 35 und 60 Gew.-%. Der Anteil an Wirkstoff liegt im allgemeinen zwischen 0,5 und 10 Gew.-%, vorzugsweise zwischen 1 und 8 Gew.-%. Der Anteil an Fraßstoff beträgt im allgemeinen zwischen 10 und 70 Gew.-%, vorzugsweise zwischen 20 und 45 Gew.-%.

Der Anteil an Bindemittel liegt im allgemeinen zwischen 0,5 und 10 Gew.-%, vorzugsweise zwischen 1 und 5 Gew.-%, und Zusatzstoffe sind gegebenenfalls in Anteilen zwischen 0,5 und 20 Gew.-%, vorzugsweise zwischen 0,5 und 4 Gew.-% enthalten.

Bei der Herstellung der erfindungsgemäßen Leichtkorn-Köder können vorzugsweise alle diejenigen Komponenten verwendet werden, die bereits im Zusammenhang mit der Beschreibung der erfindungsgemäßen Leichtkorn-Köder vorzugsweise genannt wurden.

Bei der Herstellung der erfindungsgemäßen Leichtkorn-Köder ist es erforderlich, die Wirkstoffe in fein verteilter Form einzusetzen. Handelt es sich um feste Wirkstoffe mit Schmelzpunkten oberhalb von 50°C, so werden diese im allgemeinen, gegebenenfalls im Gemisch mit Mahlhilfsmitteln, in fein gemahlenem Zustand verwendet. Beim Einsatz von Wirkstoffen, die bei Raumtemperatur flüssig sind oder die einen Schmelzpunkt unterhalb von 50°C aufweisen, werden diese Wirkstoffe im allgemeinen gegebenenfalls im Gemisch mit sorptiven Streckmitteln und gegebenenfalls im Gemisch mit Fraßstoffen gegebenenfalls nach einer Homogenisierung des resultierenden Gemisches verwendet. Es ist jedoch auch möglich, die festen Wirkstoffe bei erhöhter Temperatur in Form von Schmelzen einzusetzen.

Die Bindemittel werden bei der Herstellung der erfindungsgemäßen Leichtkorn-Köder im allgemeinen in Form ihrer Lösungen, Emulsionen, Dispersionen oder Latices eingesetzt. Als Verdünnungsmittel kommen hierbei Wasser und/oder organische Solventien infrage. Vorzugsweise in Betracht kommen neben Wasser auch niedrig siedende organische Lösungsmittel, wie Methanol, Ethanol, Butanol und Methylenchlorid.

Bei der Durchführung des erfindungsgemäßen Verfahrens geht man im allgemeinen so vor, daß man das körnige Trägermaterial in einen Mischer gibt und entweder

a) nacheinander mit Bindemittel, gegebenenfalls im Gemisch mit einem Verdünnungsmittel, versetzt und danach mit mindestens einem Wirkstoff, Fraßstoff, gegebenenfalls Zusatzstoffen und gegebenenfalls weiterem Bindemittel, gegebenenfalls in Gegenwart eines Verdünnungsmittels, innig verrührt,

oder

b) zunächst mit Bindemittel, gegebenenfalls im Gemisch mit einem Verdünnungsmittel, sowie mit Fraßstoff versetzt und danach mit mindestens einem Wirkstoff und mit weiterem Bindemittel, gegebenenfalls im Gemisch mit einem Verdünnungsmittel und gegebenenfalls mit Zusatzstoffen innig verrührt,

und die so erhaltenen körnigen Produkte gegebenenfalls trocknet und gegebenenfalls erneut in der angegebenen Weise beschichtet.

Sowohl beim Arbeiten nach der Variante (a) als auch nach der Variante (b) können einer oder mehrere Wirkstoffe mit Hilfe eines oder mehrerer Bindemittel auf dem körnigen Trägermaterial fixiert werden. Die Reihenfolge, in der die Komponenten auf das Trägermaterial aufgebracht werden, kann in der jeweils gewünschten Weise variiert werden.

Das erfindungsgemäße Verfahren wird im allgemeinen bei Raumtemperatur durchgeführt. Sollen Wirkstoffe in Form von Schmelzen mit dem Trägermaterial in Kontakt gebracht werden, so ist es erforderlich, zumindest bei diesem Schritt des Verfahrens bei Temperaturen zu arbeiten, die oberhalb der Wirkstoff-Schmelzpunkte liegen.

Die Trocknungstemperatur kann innerhalb eines größeren Bereiches variiert werden. Im allgemeinen trocknet man bei Temperaturen zwischen 20°C und 70°C, vorzugsweise zwischen 30°C und 65°C. Die Trocknung kann gegebenenfalls unter vermindertem Druck vorgenommen werden. Ferner kann die Trocknung entweder in dem zur Beschichtung des Trägermaterials dienenden Mischer oder aber in einer separaten Trocknungsapparatur erfolgen.

Das erfindungsgemäße Verfahren kann entweder diskontinuierlich oder kontinuierlich in üblichen Apparaturen durchgeführt werden.

Die erfindungsgemäßen Leichtkorn-Köder lassen sich, - wie oben bereits erwähnt -, sehr gut zur Bekämpfung von Bodenschädlingen verwenden. Unter Bodenschädlingen sind in diesem Zusammenhang Schnecken und Erdraupen zu verstehen. Zu den Schnecken gehören alle landlebenden Nacktund Gehäuseschnecken, welche in der Mehrzahl als polyphage Schädlinge landwirtschaftlicher und gärtnerischer Kulturen auftreten. Wichtige derartige Schädlinge sind Nacktschnecken, wie Arion rufus (Große Wegschnecke), Arion ater und andere Arionidae, Limax-Arten, ferner Ackerschnecken, wie Deroceras reticulatum und agreste aus der Familie Limacidae, sowie Arten aus der Familie Milacidae, und außerdem Gehäuseschnecken, wie solche der Gattung Bradybaena, Cepaea, Cochlodina, Discus, Euomphalia, Galba, Helicigona, Helix, Helicella, Helicodiscus, Lymnaea, Opeas, Vallonia und Zonitoides. Als Beispiele für Erdraupen seien Agrotis s.p. genannt.

Bei der Bekämpfung von Bodenschädlingen kann die Aufwandmenge an erfindungsgemäßen Leichtkorn-Ködern innerhalb eines größeren Bereiches variiert werden. Im allgemeinen verwendet man zwischen 3 und 15 kg Leichtkorn-Köder pro Hektar, vorzugsweise zwischen 5 und 10 kg pro Hektar.

Die erfindungsgemäßen Leichtkorn-Köder können nach üblichen Methoden, wie z.B. durch Streuen, ausgebracht werden.

Die Herstellung und die Verwendung der erfindungsgemäßen Leichtkorn-Köder geht aus den folgenden Beispielen hervor.

Herstellungsbeispiele

Beispiel 1

In einem Mischer werden 23 kg unter Druck arrondierte Perlitkörner mit einem Durchmesser von 2 bis 4 mm mit 14 kg Weizenmehl, 6 kg 0,5%iger wäßriger Methylcellulose-Dispersion, 1,2 kg 25%iger wäßriger Polyvinylacetat-Dispersion, 55 g Melasse, 92 g hochdisperser Kieselsäure, 195 g blauem Farbstoff und 0,2 kg fein gemahlenem N-Methyl-O-(3,5-dimethyl-4-methylthio-phenyl)-carbamat der Formel

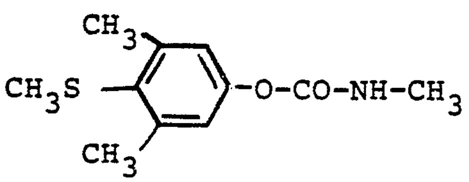

bei Raumtemperatur innig vermischt. Danach werden noch 1,2 kg 25%iger wäßriger Polyvinylacetat-Dispersion und 0,36 kg fein gemahlenes N-Methyl-O-(3,5-dimethyl-4-methyl- thio-phenyl)-carbamat zugegeben. Man mischt weitere 5 Minuten und trocknet dann in dem Mischer bei einer Abluft-Temperatur von maximal 60°C. Man erhält auf diese Weise 40 kg kugelförmige Granulat-Teilchen mit einem Schüttvolumen von 315 ml pro 100 g. Teilchendurchmesser: 2-5 mm

Teilchendurchmesser: 2-5 mm

Wirkstoffgehalt: 1,4 Gew.-%

Beispiel 2

In einem Mischer werden 23 kg unter Druck arrondierte Perlitkörner mit einem Durchmesser von 2 bis 4 mm mit 14 kg Weizenmehl, 40 g eines unter dem Namen Preventol(R) auf dem Markt befindlichen Konservierungsmittels, 6 kg 0,5%iger wäßriger Methylcellulose-Dispersion, 1,2 kg 25%iger wäßriger Polyvinylacetat-Dispersion, 55 g Melasse, 92 g hochdisperser Kieselsäure, 195 g blauem Farbstoff und 0,6 kg fein gemahlenem N-Methyl-O-(3,5-dimethyl-4-methylthio-phenyl)-carbamat der Formel

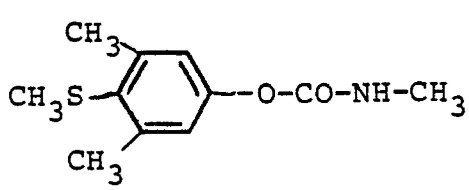

bei Raumtemperatur innig vermischt. Danach werden noch 1,2 kg 25%iger wäßriger Polyvinylacetat-Dispersion und 0,6 kg fein gemahlenes N-Methyl-O-(3,5-dimethyl-4-methyl-thio-phenyl)-carbamat zugegeben. Man mischt weitere 5 Minuten und trocknet dann in dem Mischer bei einer Abluft-Temperatur von maximal 60°C. Man erhält auf diese

Weise 40 kg kugelförmige Granulat-Teilchen mit einem Schüttvolumen von 315 ml pro 100 g.

Teilchendurchmesser: 2-5 mm

Wirkstoffgehalt: 3 Gew.-%

Beispiel 3

In einem Mischer werden 23 kg unter Druck arrondierte Perlitkörner mit einem Durchmesser von 2 bis 4 mm mit 14 kg Weizenmehl, 6 kg 0,5%iger wäßriger Methylcellulose-Dispersion, 1,2 kg 25%iger wäßriger Polyvinylacetat-Dispersion, 55 g Melasse, 92 g hochdisperser Kieselsäure, 195 g blauem Farbstoff und 0,6 kg fein gemahlenem N-Methyl-O-(3,5-dimethyl-4-methylthio-phenyl)-carbamat der Formel

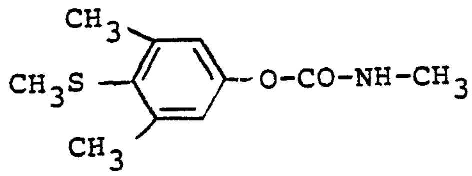

bei Raumtemperatur innig vermischt. Danach werden noch 1,2 kg 25%iger wäßriger Polyvinylacetat-Dispersion und 0,6 kg fein gemahlenes N-Methyl-O,(3,5-dimethyl-4-methyl-thio-phenyl)-carbamat zugegeben. Man mischt weitere 5 Minuten und trocknet dann in dem Mischer bei einer Abluft-Temperatur von maximal 60°C. Man erhält auf diese Weise 40 kg kugelförmige Granulat-Teilchen mit einem Schüttvolumen von 315 ml pro 100 g.

Teilchendurchmesser: 2-5 mm

Wirkstoffgehalt: 3 Gew.-%

Beispiel 4

In einem Mischer werden 162 kg unter Druck arrondierte Perlitkörner mit einem Durchmesser von 2-4 mm mit 98 kg Weizenmehl, 31 kg 0,5%iger wäßriger Methylcellulose-Dispersion, 8,7 kg 25%iger wäßriger Polyvinylacetat-Dispersion, 6 kg hochdisperser Kieselsäure, 8 kg Talkum und 6 kg O,O-Diethylthionophosphoryl-α-oximinophenyl-essigsäurenitril der Formel

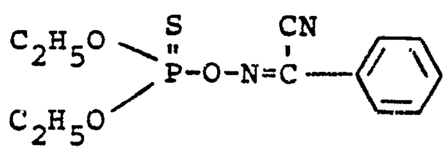

bei Raumtemperatur innig vermischt. Danach werden noch 8,7 kg 25%iger wäßriger Polyvinylacetat-Dispersion und 6 kg fein gemahlenes N-Methyl-O-(3,5-dimethyl-4-methyl-thio-phenyl)-carbamat der Formel

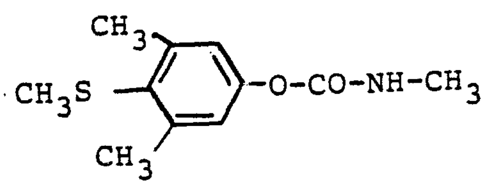

zugegeben. Man mischt weitere 15 Minuten und trocknet dann in dem Mischer bei einer Abluft-Temperatur von maximal 60°C. Man erhält auf diese Weise 300 kg kugelförmige Granulat-Teilchen mit einem Schüttvolumen von 315 ml pro 100 g.

Teilchendurchmesser: 2-5 mm

Wirkstoffgehalt: 4 Gew.-%

Verwendungsbeispiele

In den nachfolgenden Verwendungsbeispielen wurden die nachstehend angegebenen Vergleichspräparate eingesetzt:

(I) = Handelsübliches Schnecken-Leichtkorn auf Basis von Metaldehyd

Wirkstoffgehalt: 10 Gew.-%

(II) = Handelsübliches Schneckenkorn (Extruder-Granulat)

auf Basis von N-Methyl-O-(3,5-dimethyl-4-methyl-thio--phenyl)-carbamat Wirkstoffgehalt: 4 Gew.-%

Beispiel A

Bekämpfung von Schnecken

Versuchstier: Rote Wegschnecke (Arion rufus)

In quadratischen Holzkästen mit einer Grundfläche von 0,25 m² wird der Boden mit einer 2 bis 3 cm hohen Schicht Komposterde bedeckt, die vor Versuchsbeginn angefeuchtet wird. Anschließend wird das zu prüfende Präparat in der jeweils gewünschten Aufwandmenge auf der Hälfte der zur Verfügung stehenden Versuchsfläche pro Kasten ausgebracht. Ferner werden in jeden Kasten in 2 diagonal gegenüberliegenden Ecken 2 Kartoffelhälften als Beifutter gegeben. Danach werden in jeden Kasten 10 Versuchstiere gesetzt.

Nach 7 Tagen wird die Anzahl der toten Versuchstiere ermittelt und in Prozent ausgedrückt. Dabei bedeutet 0 %, daß keine toten Tiere vorhanden sind, während 100 % eine vollständige Abtötung der Versuchstiere bezeichnet.

Während der gesamten Versuchsdauer wird die Temperatur auf 19°C und die relativ Luftfeuchtigkeit auf 90 bis 95 % gehalten.

Eingesetzte Präparate, Aufwandmengen und Versuchsergebnisse gehen aus der folgenden Tabelle hervor.

Tabelle A

Bekämpfung von Schnecken/Arion rufus

| Präparat gemäß Beispiel | Aufwandmenge an Präparat pro Kasten [in g] | Aufwandmenge an Wirkstoff pro Kasten [in g] | Mortalitätsrate nach 7 Tagen [in %] |
|---|---|---|---|
| - (Kontrolle) | - | - | 0 |
| (I) (bekannt) | 3,125 | 0,315 | 45 |
| (II) (bekannt) | 3,125 | 0,125 | 100 |
| (1) (erfindungsgemäß) | 3,125 | 0,0964 | 100 |

Beispiel B

Schneckenkorn-Präparate / Witterungsbeständigkeit

Im Gewächshaus wird die jeweils gewünschte Menge an Schneckenkorn-Präparat auf feuchten Torf gestreut und im Abstand von jeweils 2 Tagen mit Wasser besprüht. Wärend der gesamten Versuchsdauer wird die Temperatur auf 19°C und die relative Luftfeuchtigkeit auf 90 bis 95% gehalten.

7 Tage nach Versuchsbeginn wird der Schimmelbefall auf den Präparaten anhand der folgenden Skala bonitiert:

0 = kein Schimmelbefall

1 = leichter Schimmelbefall

2 = starker Schimmelbefall

3 = sehr starker Schimmelbefall

8 Tage nach Versuchsbeginn wird der Wirkstoffgehalt auf den Präparaten ermittelt und wie folgt bonitiert:

0 = Wirkstoff vollständig vorhanden bzw. Präparat unzerstört

1 = Wirkstoff zu weniger als 10 % abgewaschen, bzw. Präparat zu weniger als 10 % zerfallen

2 = Wirkstoff zu mehr als 10 % aber weniger als 50 % abgeswaschen, bzw. Präparat zu mehr als 10 % aber weniger als 50 % zerfallen

3 = Wirkstoff zu mehr als 50 % aber weniger als 90 % abgewaschen, bzw. Präparat zu mehr als 50 % aber weniger als 90 % zerfallen

4 = Wirkstoff vollständig abgewaschen, bzw. Präparat vollständig zerfallen.

Eingesetzte Präparate und Versuchsergebnisse gehen aus der folgenden Tabelle hervor:

Tabelle B Schneckenkorn-Präparate / Witterungsbeständigkeit

| Präparat gemäß Beispiel | Schimmelbefall nach 7 Tagen | Wirkstoffgehalt nach 8 Tagen |
|---|---|---|
| (II) (bekannt) | 3 | 4 |
| (2) (erfindungsgemäß) | 1 | 3 |
| (3) (erfindungsgemäß) | 2 | 2 |

**Ansprüche**

1. Leichtkorn-Köder, dadurch gekennzeichnet, daß sie

- als Trägermaterial einen während des Blähvorganges unter Druck arrondierten körnigen Glasoder Gesteinsschaum,

- mindestens einen zur Bekämpfung von Bodenschädlingen

geeigneten Carbamat- und/oder Phosphorsäureester--Wirkstoff,

- Fraßstoff,

- Bindemittel und

- gegebenenfalls Zusatzstoffe

enthalten.

2. Leichtkorn-Köder gemäß Anspruch 1, dadurch gekennzeichnet, daß das Trägermaterial ein Schüttvolumen von 200 bis 800 ml pro 100 g aufweist.

3. Leichtkorn-Köder gemäß Anspruch 1, dadurch gekennzeichnet, daß sie als Trägermaterial Perlit-Körner enthalten, die während des Blähvorganges unter Druck arrondiert sind.

4. Leichtkorn-Köder gemäß Anspruch 1, dadurch gekennzeichnet, daß sie N-Methyl-O-(3,5-dimethyl-4-methylthio--phenyl)-carbamat als Wirkstoff zur Bekämpfung von Bodenschädlingen enthalten.

5. Leichtkorn-Köder gemäß Anspruch 1, dadurch gekennzeichnet, daß sie N-Methyl-O-(3,5-dimethyl-4-methylthio--phenyl)-carbamat und O,O-Diethyl-thionophosphoryl)-α--oximino-phenyl-essigsäurenitril als Wirkstoffe zur Bekämpfung von Bodenschädlingen enthalten.

6. Leichtkorn-Köder gemäß Anspruch 1, dadurch gekennzeichnet, daß sie Konservierungsmittel, Farbstoffe, Lockstoffe, Mahlhilfsmittel, Repellents, Wasser und/oder organische Solventien als Zusatzstoffe enthalten.

7. Verfahren zur Herstellung von Leichtkorn-Ködern, dadurch gekennzeichnet, daß man einen während des Blähvorganges unter Druck arrondierten körnigen Glas- oder Gesteinsschaum durch Mischen mit Bindemittel, gegebenenfalls im Gemisch mit einem Verdünnunsmittel, sowie mit mindestens einem zur Bekämpfung von Bodenschädlingen geeigneten Carbamat-und/oder Phosphorsäureester-Wirkstoff, Fraßstoff und gegebenenfalls Zusatzstoffen sowie gegebenenfalls mit weiterem Bindemittel, gegebenenfalls in Gegenwart eines Verdünnungsmittels, beschichtet und die so erhaltenen körnigen Produkte gegebenenfalls trocknet und gegebenenfalls erneut in der angegebenen Weise beschichtet.

8. Verwendung von Leichtkorn-Ködern gemäß Anspruch 1, zur Bekämpfung von Bodenschädlingen.

9. Verwendung von Leichtkorn-Ködern gemäß Anspruch 1, zur Bekämpfung von Schnecken.

10. Verwendung von Leichtkorn-Ködern gemäß Anspruch 1 zur Bekämpfung von Erdraupen.